Europäisches Patentamt

(19) European Patent Office

Office européen des brevets

(11) Publication number: **0 147 356**
**A2**

(12)

# EUROPEAN PATENT APPLICATION

(21) Application number: 84630197.6

(22) Date of filing: 14.12.84

(51) Int. Cl.⁴: **G 05 D 23/24**
**F 25 B 41/06**

(30) Priority: 22.12.83 US 564542

(43) Date of publication of application:
03.07.85 Bulletin 85/27

(84) Designated Contracting States:
CH DE FR GB IT LI

(71) Applicant: CARRIER CORPORATION
Carrier Tower 6304 Carrier Parkway P.O. Box 4800
Syracuse New York 13221(US)

(72) Inventor: Schedel, John W.
3273 Webb Road
Lafayette New York 13084(US)

(72) Inventor: Lord, Richard G.
116 Sotherden Drive
Liverpool New York 13088(US)

(74) Representative: Weydert, Robert et al,
Office Dennemeyer S.à.r.l. 21-25 Allée Scheffer P.O. Box
41
L-2010 Luxembourg(LU)

(54) A control system for an electronic expansion valve in a refrigeration system.

(57) A control system for an electronic expansion valve (10)
in a refrigeration system (5) is disclosed. The electronic
expansion valve (10) incrementally controls refrigerant flow
between a condenser (13) and an evaporator (11) of the
refrigeration system (5). The electronic expansion valve (10)
is operated by a digitally controllable electric motor (24)
which incrementally adjusts the position of the electronic
expansion valve (10) in response to electronic digital control
signals supplied to the motor (24) from a microcomputer
control system (23). The microcomputer control system (23)
supplies the electronic digital control signals to the motor
(24) in a preprogrammed manner in response to selected
sensed operating conditions of the refrigeration system.
Preferably, the electronic expansion valve (10) is controlled
in response to superheat of refrigerant vapor flowing from
the evaportor (11) to a compressor (12) of the refrigeration
system (5).

FIG. I

EP 0 147 356 A2

-1-

## A CONTROL SYSTEM FOR AN ELECTRONIC
## EXPANSION VALVE IN A REFRIGERATION SYSTEM

### Background of the Invention

The present invention relates to refrigeration systems and
more particularly relates to methods and apparatus for controlling an expansion valve in a refrigeration system.
While the present invention is described herein in detail
with respect to a conventional refrigeration system, those
of ordinary skill in the art to which the present invention
pertains will recognize the wider applicability of the
present invention.  For example, the present invention may
find application for use with heat pumps, air conditioning
systems, or other such devices.

Conventional refrigeration systems utilize a recirculating
refrigerant for removing heat from the low temperature side
of the refrigeration system and for discharging heat at the
high temperature side of the refrigeration system.  The work
input necessary to operate the refrigeration system is
provided by a motor driven compressor which receives low
pressure gaseous refrigerant and compresses it to a high
pressure.  This high pressure gaseous refrigerant is supplied to a condenser where heat is removed from the gaseous refrigerant to condense it to a liquid. This liquid refrigerant is then supplied through an expansion valve to an evaporator wherein heat is transferred from a heat transfer fluid used to cool a load, such as to cool a room, to the liquid refrigerant to evaporate the liquid refrigerant. This gaseous refrigerant from the evaporator is then returned to the compressor for recirculation through the refrigeration system.

The amount of heat absorbed by the refrigerant liquid in the evaporator includes the heat of vaporization of the liquid refrigerant; that is, the amount of heat which must be absorbed by a liquid at a given temperature to convert it to a gas at the same temperature. In addition, the gaseous refrigerant in the evaporator may absorb additional heat which raises its temperature above the temperature of vaporization. Such gaseous refrigerant is said to be superheated, and the amount by which the temperature of the gaseous refrigerant is raised above the vaporization temperature is expressed in degrees of superheat.

The expansion valve and its control system play important parts in overall refrigeration system efficiency and in control of superheat. In many applications of refrigeration systems it is desired to prevent superheating of the gaseous refrigerant or to regulate the superheat of the refrigerant to a preselected magnitude. Also, under ideal operating conditions, the expansion valve should admit an amount of refrigerant that can be evaporated and just slightly superheated in the evaporator. That is, the evaporator should be "wetted" with liquid refrigerant along approximately its entire length to provide good heat transfer and maximum refrigeration system efficiency. Conventionally, a portion of the evaporator always has been operated dry to prevent passage of liquid refrigerant to the suction side of the compressor since liquid entering the suction side of the
compressor may damage the compressor.

Presently, thermostatic expansion valves probably are the
most prevalent means for controlling the above-described
operation of a refrigeration system. Thermostatic expansion
valves generally include a diaphragm actuated valve member
having one side of the diaphragm operatively connected to a
pressure generating means. The pressure generating means
commonly is a sealed bulb having a gas enclosed in it which
is responsive to temperature. The opposite side of the
diaphragm is opposed by system pressure and the diaphragm is
preloaded by means of a spring to set the operating point of
the valve. Volume changes in the gas of the sensor in
response to changes in temperature operate the valve. While
thermostatic expansion valves work well for their intended
purposes, they cannot adequately improve refrigeration
system efficiency by assuring full utilization of the evaporator. In addition, conventional thermostatic expansion valves
are not particularly suited for controlling refrigerant
superheat. Such valves, when used to control superheat,
suffer among other shortcomings, a slow response time, a
wide regulating range, and a narrow load range.

Electrically controlled expansion valves with analog control
systems also are known. The analog control system opens and
closes the expansion valve in response to refrigeration
system operating conditions sensed by sensors providing
input signals to the analog control system which are a
function of the sensed refrigeration system operating conditions. Examples of such electrically controlled expansion
valves with analog control systems are disclosed in United
States patents 4,362,027 to Barbier, 4,067,203 to Behr,
3,967,781 to Kunz, and 3,577,743 to Long. In general, such
electrically controlled expansion valves should be able to control refrigerant flow more precisely than thermostatic expansion valves because of the theoretically faster response times of the electrically controlled expansion valves. More precise control, in turn, should improve refrigeration system efficiency. However, while such electrically controlled expansion valves may be an improvement over thermostatic controlled expansion valves, these electrically controlled expansion valves are not ideal in operation. In general, they are not particularly suitable for maintaining desired levels of refrigerant superheat and/or evaporator wetting characteristics to optimize refrigeration system efficiency without undesirable hunting of the expansion valve or flooding of the refrigeration system compressor.

Summary of the Invention

Therefore, an object of the present invention is to provide precise control of refrigerant flow through an expansion valve in a refrigeration system to optimize refrigeration system operating efficiency.

Another object of the present invention is to provide precise control of superheat in gaseous refrigerant flowing from an evaporator to a compressor in a refrigeration system.

A further object of the present invention is to provide precise control of refrigerant flow to an evaporator in a refrigeration system to optimize refrigerant wetting characteristics in the evaporator to improve the operating efficiency of the refrigeration system.

These and other objects of the present invention are attained by a control system which is operated to incrementally control refrigerant flow through an expansion valve to an evaporator in a vapor compression refrigeration system. Incremental control of the refrigerant flow through the

expansion valve provides very precise control of the refrigerant flow to the evaporator thereby allowing very precise control of refrigerant wetting characteristics in the evaporator and very precise control of superheat of refrigerant vapor flowing from the evaporator to a compressor in the refrigeration system. This precision control, among other things, allows optimization of the operating efficiency of the refrigeration system. Also, incremental control of the expansion valve provides accurate positioning of the expansion valve without the necessity of providing means, such as a feedback sensor, to sense the position of the expansion valve.

The control system according to the present invention comprises an expansion valve, a digitally controllable electric motor means, a microcomputer control system, sensors for sensing operating conditions of the refrigeration system and for supplying this sensed information to the microcomputer control system, and conductors for supplying electronic digital control signals from the microcomputer control system to the digitally controllable electric motor. The expansion valve is connected between a condenser and an evaporator in a vapor compression refrigeration system to control refrigerant flow between the condenser and the evaporator. The amount of refrigerant flowing through orifice(s) in the expansion valve is controlled by an incrementally movable control member which is part of the expansion valve. The digitally controllable electric motor is connected to the control member to incrementally adjust the position of the control member in response to the electronic digital control signals supplied to the motor via the conductors from the microcomputer control system. The microcomputer control system generates the electronic digital control signals in response to electrical input signals received from the operating condition sensors in the refrigeration system. Preferably, the digitally controllable electric motor is a stepper motor and the operating condition sensors are temperature responsive resistance devices, such as thermistors, for providing electrical input signals to the microcomputer control system which are a function of superheat of refrigerant vapor flowing from the evaporator to the compressor in the refrigeration system.

The method according to the present invention comprises the steps of sensing at least one operating condition of a refrigeration system and generating an electrical signal which is a function of the sensed condition. Then the generated electrical signal is processed according to preprogrammed procedures to generate an electronic digital control signal. The electronic digital control signal is supplied to a digitally controllable electronic expansion valve to incrementally control refrigerant flow through the expansion valve in response to the electronic digital control signal. Preferably, the sensing step comprises sensing refrigerant superheat of refrigerant vapor flowing from the evaporator to the compressor in the refrigeration system.

Brief Description of the Drawing

Other objects and advantages of the present invention will be apparent from the following detailed description in conjunction with the accompanying drawing, wherein like reference numerals identify like elements, and in which:

Figure 1 is a schematic illustration of a vapor compression refrigeration system with a control system for an electronic expansion valve according to the present invention.

Figure 2 is a detailed, cross-sectional view of a novel electronic expansion valve which may be used with the control system depicted in Figure 1.

Figure 3 is a detailed, cross-sectional view of the novel electronic expansion valve depicted in Figure 2 with the valve shown in a fully open position.

Figure 4 is a detailed, cross-sectional view of the sealing means in the orifice assembly which is part of the novel electronic expansion valve shown in Figures 2 and 3.

Description of the Preferred Embodiment

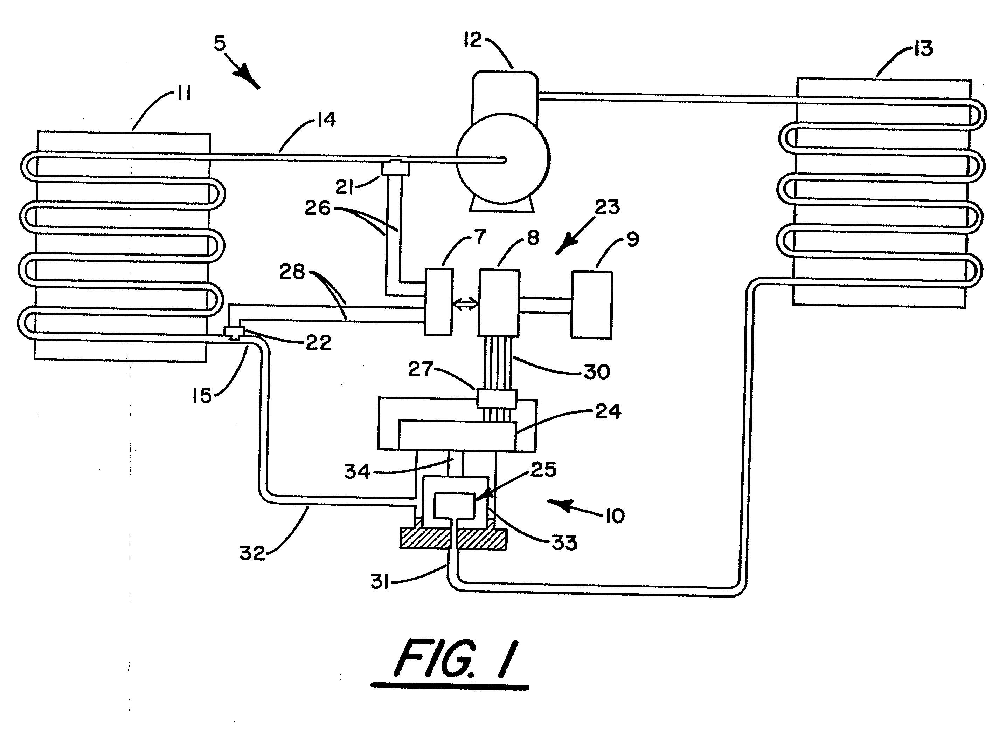

Figure 1 is a schematic illustration of a control system for an electronic expansion valve 10 in a vapor compression refrigeration system 5 according to the present invention. Besides the electronic expansion valve 10, the vapor compression refrigeration system 5 includes an evaporator 11, a compressor 12, and a condenser 13 connected in the usual manner. The control system comprises temperature sensors 21 and 22, and a microcomputer control system 23, which includes a microcomputer 7, an electronic switching device 8, and a power supply 9. The electronic expansion valve 10 includes a stepper motor 24, an orifice assembly 25, an electrical connector 27, and a sleeve member 33. A lead screw 34 connects the stepper motor 24 to the sleeve member 33.

Many types of sensors may be employed as temperature sensors 21 and 22. Preferably, the sensors 21, 22 are temperature responsive resistance devices such as thermistors. As shown in Figure 1, temperature sensor 21 is connected to refrigerant line 14 to sense the temperature of refrigerant flowing through this line 14 from the evaporator 11 to the compressor 12. This sensed temperature is indicative of the temperature of the superheated refrigerant vapor flowing to the compressor 12. An electrical signal which is a function of the temperature sensed by the temperature sensor 21 is provided to the microcomputer control system 23 through electrical lines 26. Temperature sensor 22 is connected to refrigerant line 15 to sense the temperature of refrigerant entering the evaporator 11 from the expansion valve 10. This temperature is the saturation temperature of refrigerant in the evaporator 11. An electrical signal which is a function of the temperature sensed by the temperature sensor 22 is provided to the microcomputer control system 23 through electrical lines 28.

As shown in Figure 1, temperature sensors 21, 22 each have sensing elements inserted in the refrigerant lines 14, 15 which are directly in contact with the refrigerant flowing through the refrigerant lines 14, 15. However, it should be noted that the temperature sensors 21, 22 may be simply attached to the refrigerant lines 14, 15 or other types of sensors may be used to sense the desired refrigeration system 5 operating conditions, as will be readily apparent to one of ordinary skill in the art to which the present invention pertains.

The microcomputer control system 23 is a combination of electronic devices suitable for receiving electrical input signals from the temperature sensors 21, 22, for processing the received electrical input signals according to preprogrammed procedures, for generating electronic digital control signals in response to the processed input signals, and for supplying these generated electronic digital control signals through the electrical connector 27 to the stepper motor 24 of the electronic expansion valve 10. For example, as shown in Figure 1, the microcomputer control system 23 includes the microcomputer 7 for receiving electrical input signals via electrical lines 26, 28 from the temperature sensors 21, 22, and for processing these received electrical input signals according to preprogrammed procedures. The power supply 9 supplies electrical power through the electronic switching device 8 to electrical lines 30 which are connected through the electrical connector 27 to the stepper motor 24 of the electronic expansion valve 10. The electronic switching device 8 is operated under control of the microcomputer 7 to supply electrical power to the stepper motor 24 in the form of electronic digital control signals which are a function of the input signals from the temperature sensors 21, 22, which are received and processed by the microcomputer 7. Normally, electronic devices such as the switching device 8 and the power supply 9 are necessary because microcomputers are not usually well suited for supplying relatively large amounts of electrical power directly to a device such as the stepper motor 24. For example, the microcomputer 7 may be a model 8031 microprocessor with a model 2764 memory device (EPROM) from Intel Corporation of 3065 Bowers Avenue, Santa Clara, California 95051. With this kind of microcomputer it is preferable to supply electrical power to a stepper motor from a power supply through a switching device under the control of the microcomputer rather than attempting to supply the electrical power to the stepper motor directly from the microcomputer.

The microcomputer 7 may be preprogrammed to process the electrical input signals from the temperature sensors 21, 22 according to any one of a variety of procedures. For example, the microcomputer 7 may process the electrical input signals to determine the superheat of the refrigerant vapor flowing from the evaporator 11 to the compressor 12. This is accomplished by the microcomputer 7 calculating the difference in temperature sensed by the temperature sensors 21 and 22. Then the electronic expansion valve 10 may be adjusted by the microcomputer control system 23 to directly respond to this calculated temperature difference. That is, the expansion valve 10 may be incrementally opened or closed by an amount proportional to the calculated temperature difference. In this manner, the superheat of the refrigerant vapor entering the compressor 12 may be maintained at an optimal level which, in turn, optimizes the refrigerant wetting characteristics in the evaporator 11 thereby optimizing overall operating efficiency of the refrigeration system 5. Of course, the microcomputer 7 may monitor other operating conditions of the refrigeration system 5, besides the temperatures sensed by the temperature sensors 21, 22, and the electronic expansion valve 10 may be adjusted by the microcomputer control system 23 in response to appropriate functions of any or all of these sensed operating conditions.

As shown in Figure 1, the microcomputer control system 23 supplies the electronic digital control signals through the electrical lines 30, and through the electrical connector 27, to the stepper motor 24 which is actuated in a stepwise manner by these control signals. For example, the stepper motor 24 may rotate a certain fixed amount in response to a specific series of electronic digital control signals from the microcomputer control system 23. This stepwise actuation of the stepper motor 24 results in precise control of opening and closing movements of the sleeve member 33 whose position is incrementally controlled relative to the orifice assembly 25 by the stepper motor 24. Preferably, a one step rotation of the stepper motor 24 in response to one pattern of electronic digital control signals from the microcomputer control system 23 is translated by the lead screw 34 into a linear one step increment of opening or closing of the sleeve member 33 relative to the orifice assembly 25 in the electronic expansion valve 10.

It should be noted that the stepper motor 24 may be any type of digitally controllable motor means responsive to the electronic digital control signals from the microcomputer control system 23. For example, the stepper motor 24 may be a model LA23GCK-46 bipolar stepper motor available from Eastern Air Devices of Dover, New Hampshire. This particular stepper motor 24 requires five electrical lines for connecting the electronic switching device 8 of the microcomputer control system 23 to the stepper motor 24. Four of the electrical lines 30 supply the electronic digital control signals to selected poles of the stepper motor 24 to stepwise actuate the stepper motor 24. The fifth electrical line 30 is a common or 12 volt power line.

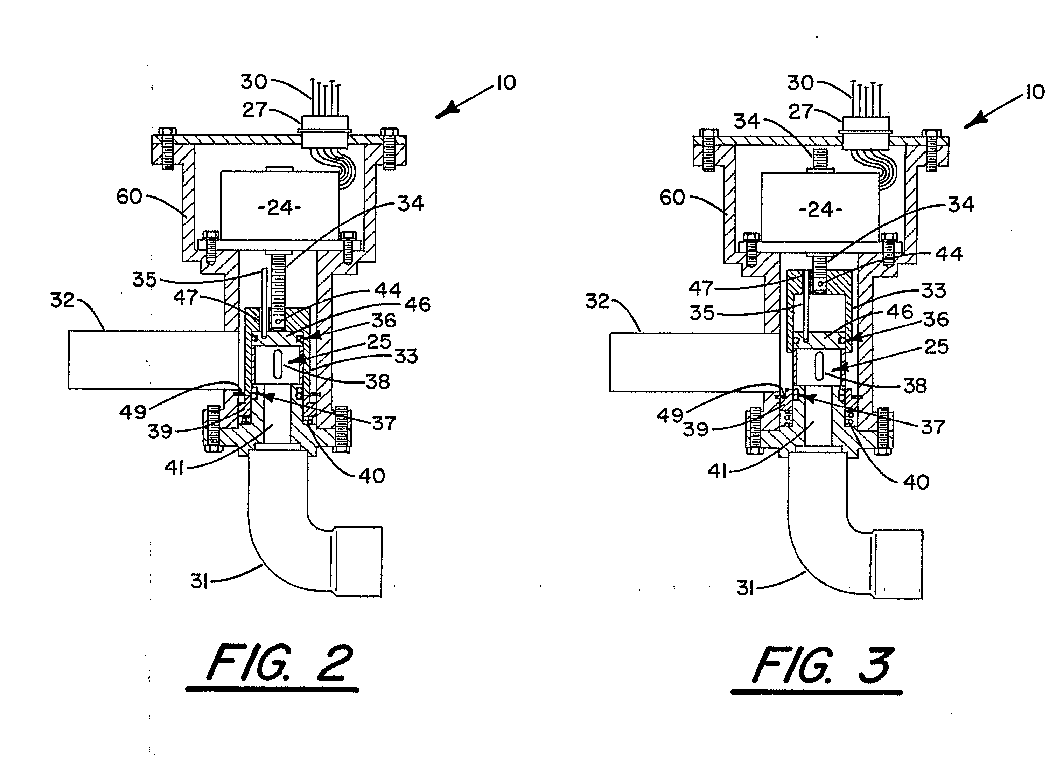

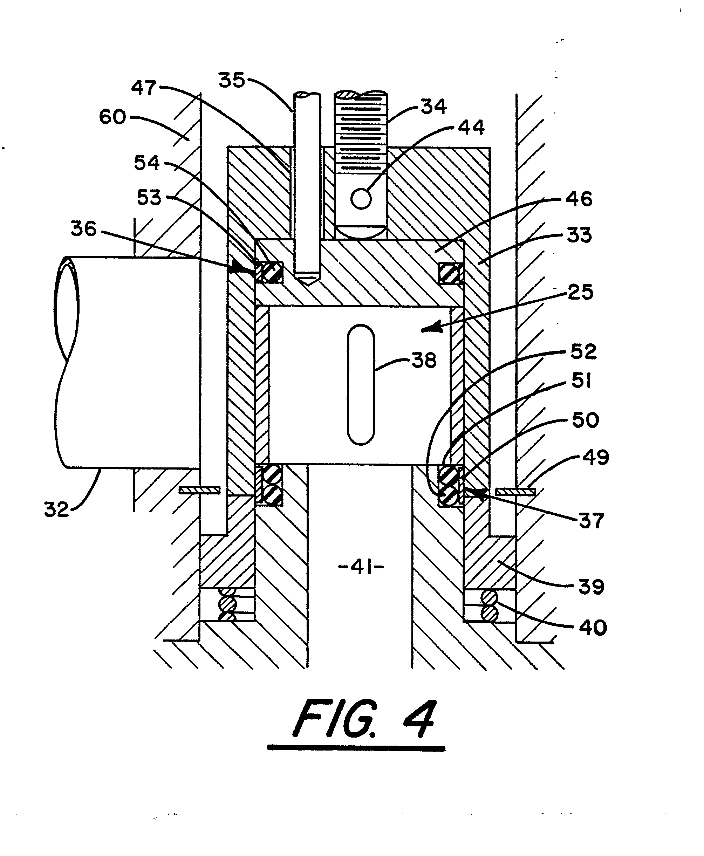

In general, the electronic expansion valve 10 may be any incrementally adjustable expansion valve suitable for connection to a digitally controllable motor means, so that the electronic expansion valve 10 may be incrementally opened or closed in response to stepwise actuations of the digitally controllable motor means. However, Figures 2 and 3 show a cross-sectional view of a novel electronic expansion valve 10 which is preferred for use with the control system depicted in Figure 1. As shown in Figures 2 and 3, this novel electronic expansion valve 10 is a generally cylindrical structure with a generally annular sleeve member 33 which can be incrementally moved up and down over a hollow cylindrical orifice assembly 25 by operation of a rotatable stepper motor 24. The stepper motor 24 is hermetically sealed within housing 60 of the electronic expansion valve 10 to allow refrigerant passing through the vlave 10 to flow over stepper motor 24. Figure 2 shows the novel expansion valve 10 in a fully closed position while Figure 3 shows the expansion valve 10 in a fully open position.

As shown in Figures 2 and 3, in addition to the stepper motor 24, the orifice assembly 25, and the sleeve member 33, the electronic expansion valve 10 includes a refrigerant inlet 31, a refrigerant outlet 32, a lead screw 34 connecting the stepper motor 24 and the sleeve member 33, and a rod 35 embedded in a capped end 46 of the orifice assembly 25 and extending up through an opening 47 in the sleeve member 33. Also, there is a first annular sealing means 36 located above a slot 38 in the orifice assembly 25 near the top of the orifice assembly 25 and a second annular sealing means 37 located below the slot 38 in the orifice assembly 25 near an open end 41 of the orifice assembly 25 which is connected to the refrigerant inlet 31. The slot 38 is an elongated opening in the periphery of the orifice assembly 25. The size of the opening of the slot 38 controls the refrigerant flow through the electronic expansion valve 10. For ease of illustration only one slot 38 is shown in Figures 2 and 3. However, it should be noted that there may be a plurality of circumferentially spaced slots 38 in the orifice assembly 25.

Referring to Figure 3, in operation, liquid refrigerant from the condenser 13 passes through the refrigerant inlet 31 and through the open end 41 of the orifice assembly 25 into the orifice assembly 25. This liquid refrigerant then passes through the slot 38 of the orifice assembly 25 and a portion of the liquid refrigerant passing through the slot 38 is flashed in an adiabatic expansion process as it passes through the slot 38. Then, this mixed liquid and gaseous refrigerant flows out of the valve 10 through the refrigerant outlet 32 to the evaporator 11.

The sleeve member 33 slides up and down over the orifice assembly 25 to adjust the size of the opening of the slot 38 in the orifice assembly 25. This linear sliding movement of the sleeve member 33 is controlled by operation of the stepper motor 24 which transmits forces to the sleeve member 33 through the lead screw 34 which is attached to the sleeve member 33 by a pin 44 as shown in Figures 2, 3, and 4. In this manner, the size of the opening of the slot 38 in the orifice assembly 25 is precisely controlled because the sleeve member 33 is moved only in increments by stepwise actuation of the stepper motor 24.

In a preferred mode of operation, the electronic digital control signals received by the stepper motor 24 through the electrical lines 30 operate the stepper motor 24 to rotate the stepper motor 24 in discrete steps as discussed above. This discrete rotation of the stepper motor 24 results in incrementally adjusting the position of the sleeve member 33 relative to the slot 38 in the orifice assembly 25. Ideally, each electronic digital control signal which is supplied via the electrical lines 30 to the stepper motor 24 should ultimately increment the sleeve member 33 a single discrete unit of movement either up or down over the slot 38 in the orifice assembly 25 depending on the direction of rotation of the stepper motor 24. Preferably, the sleeve member 33 has a relatively long stroke and the slot 38 in the orifice assembly 25 is relatively long compared to orifices in conventional refrigerant expansion valves. For example, the length of the slot 38 in the orifice assembly 25 may be on the order of 3/4 of an inch (19.05 millimeters) with the sleeve member 33 having incremental steps of movement on the order of .001 inch (0.0254 millimeters) per step thereby providing approximately 760 discrete opening sizes for the slot 38. This results in extremely precise control of the size of the opening of the slot 38 and consequently very precise control of the refrigerant flow through the electronic expansion valve 10.

It should be noted that the rod 35 is embedded in the capped end 46 of the orifice assembly 25 and passes up through the opening 47 in the sleeve member 33. The rod 35 does not completely fill the opening 47 in the sleeve member 33 thereby allowing refrigerant to flow through the opening 47 to equalize pressures on opposing surfaces of the sleeve member 33 during operation of the electronic expansion valve 10. The rod 35 also prevents undesirable rotations of the sleeve member 33 relative to the orifice assembly 25 by torques which are transmitted from the stepper motor 24 through the lead screw 34 to the sleeve member 33 during operation of the stepper motor 24.

Because the sleeve member 33 is moved only in increments relative to the slot 38 in the orifice assembly 25, the absolute position of the sleeve member 33 relative to the orifice assembly 25, and, therefore, the size of the opening of the slot 38, can be monitored by the microcomputer control system 23 to a high degree of accuracy during operation of the electronic expansion valve 10. However, at startup of the refrigeration system 5 the absolute position of the sleeve member 33 relative to the orifice assembly 25 must be determined to initialize the microcomputer control system 23. This is accomplished by the microcomputer control system 23 supplying electronic digital control signals via electrical lines 30 to the stepper motor 24 to drive the sleeve member 33 to a fully closed position at startup of the refrigeration system 5. If the sleeve member 33 is already fully closed at startup then the stepper motor 24 will simply slip as the microcomputer control system 23 drives the sleeve member 33 closed without harming the stepper motor 24 or the sleeve member 33. After initializing the starting position of the electronic expansion valve 10, the microcomputer control system 23 controls the electronic expansion valve 10 in response to operating conditions of the refrigeration system 5 starting from the known fully closed position of the valve 10. During operation of the refrigeration system 5, the logic circuitry of the microcomputer control system 23 retains the last known position of the sleeve member 33 in memory and when the position of the sleeve member 33 is adjusted the microcomputer control system 23 changes the memory to reflect the new position of the sleeve member 33. In this manner, the position of the sleeve member 33 and thus the size of the opening of the slot 38 in the orifice assembly 25 are continuously known during operation of the refrigeration system 5 without the necessity of providing any type of absolute position sensing means such as a feedback sensor, for sensing the position of the sleeve member 33.

Referring to Figure 2, when the electronic expansion valve 10 is in the fully closed position; that is, when the sleeve member 33 completely covers the slot 38 in the orifice assembly 25, first and second annular sealing means 36, 37, substantially prevent refrigerant flow between the refrigerant inlet 31 and the refrigerant outlet 32 of the valve 10. As best shown in Figure 4, preferably, the first sealing means 36 comprises a carbon filled teflon seal 53 backed by an O-ring 54 while the second sealing means 37 comprises another carbon filled teflon seal 50 backed by two O-rings 51 and 52. Each sealing means 36, 37 is seated in an annular recess in the main body of the orifice assembly 25. The first sealing means 36 is located in the capped end 46 of the orifice assembly 25 above the slot 38 in the orifice assembly 25. The second sealing means 37 is located at the open end 41 of the orifice assembly 25 in the main body of the orifice assembly 25 below the slot 38. When the sleeve member 33 is in the fully closed position the sealing means 36, 37 are located between the main body of the orifice assembly 25 and the sleeve member 33. Thus, the sealing means 36, 37 and the sleeve member 33 surround the slot 38 to effectively prevent refrigerant flow through the electronic expansion valve 10 when the sleeve member 33 is in its fully closed position. Also, it should be noted that the sealing means 36, 37 are designed so that there are no unbalanced forces on the fully closed sleeve member 33 which must be overcome when it is desired to move the sleeve member 33 from its fully closed position.

An annular spring loaded follower 39 is provided near the bottom of the orifice assembly 25 as shown in Figures 2, 3, and 4. The spring loaded follower 39 is upwardly biased by a spring 40 to cover the second annular sealing means 37 when the sleeve member 33 moves upward out of contact with the second sealing means 37 and out of contact with the follower 39. The spring loaded follower 39 covers the second annular sealing means 37 to compress the sealing means 37 into its annular recess thereby preventing the sealing means 37 from unseating out of its annular recess due to the normal pressure variations across the electronic expansion valve 10 during operation of the valve 10. As best shown in Figure 4, the spring 40 allows the sleeve member 33 to displace the spring loaded follower 39 downwardly, partially out of contact with the second sealing means 37 when the sleeve member 33 is moved to its fully closed position. Also, a stop 49 is provided as shown in Figures 2, 3 and 4, to provide a stop surface for limiting the upward travel distance of the spring loaded follower 39 when the sleeve member 33 is moved out of contact with the follower 39.

The first and second sealing means 36, 37 provide positive, complete shutoff of refrigerant flow through the electronic expansion valve 10 when the sleeve member 33 is in its fully closed position. Thus, if desired, the electronic expansion valve 10 may be operated by the microcomputer control system 23 to provide a shutoff valve function thereby eliminating the need for a conventional liquid line solenoid valve in the refrigerant line connecting the condenser 13 to the electronic expansion valve 10 of the refrigeration system 5. Such a conventional liquid line solenoid valve is normally required to prevent refrigerant migration from the condenser 13 to the evaporator 11 during periods of shutdown of the refrigeration system 5. Eliminating the need for such a conventional liquid line solenoid valve greatly simplifies the structure, operation, and cost of the refrigeration system 5. Of course, an input indicating shutdown of the refrigeration system 5 must be provided to the microcomputer control system 23 and the system 23 must be programmed to drive the sleeve member 33 to its fully closed position when the input indicating shutdown of the refrigeration system 5 is provided to the microcomputer control system 23.

Of course, the foregoing description is directed to a preferred embodiment of the present invention and various modifications and other embodiments of the present invention will be readily apparent to one of ordinary skill in the art to which the present invention pertains. Therefore, while the present invention has been described in conjunction with a particular embodiment it is to be understood that various modifications and other embodiments of the present invention may be made without departing from the scope of the invention as described herein and as claimed in the appended claims.

## CLAIMS

What is claimed is:

1. A control system for a vapor compression refrigeration system including a compresssor, a condenser and an evaporator, said control system comprising:

an expansion valve connected between the condenser and the evaporator to control refrigerant flow between the condenser and the evaporator depending on operating position of said expansion valve;

digitally controllable electric motor means connected to the expansion valve for incrementally adjusting the operating position of the expansion valve in response to electronic digital control signals;

a control means for processing electrical input signals according to preprogrammed procedures and for generating electronic digital control signals in response to the processed electrical input signal;

conductor means for supplying the generated electronic digital control signals from the control means to the digitally controllable electric motor means; and

sensor means, electrically connected to the control means, for sensing at least one operating condition of the refrigeration system and for supplying an electrical input signal to the control means which is a function of the sensed operating condition.

2. A control system for a vapor compression refrigeration system as recited in claim 1 wherein the digitally controllable electric motor means comprises:

a stepper motor.

3. A control system for a vapor compression refrigeration system as recited in claim 1 wherein the control means comprises:

a microcomputer for receiving the electrical input signal from the sensor means, for processing the electrical input signal according to preprogrammed procedures, and for generating control signals in response to the processed electrical input signal;

an electrical power supply; and

an electronic switching device electrically connected to the microcomputer to receive the control signals generated by the microcomputer, and electrically connected between the electrical power supply and the conductor means to provide electronic digital control signals from the power supply through the conductor means to the digitally controllable electric motor in response to the control signals received from the microcomputer.

4.  A control system for a vapor compression refrigeration system as recited in claim 1 wherein the sensor means comprises:

temperature responsive resistance means for providing an electrical input signal to the control means which is a function of superheat of refrigerant vapor flowing from the evaporator to the compressor.

5.  A control system for a vapor compression refrigeration system as recited in claim 4 wherein the temperature responsive resistance means comprises:

a first thermistor located at an outlet from the evaporator to sense the temperature of refrigerant vapor flowing from the evaporator to the compressor; and

a second thermistor located at an inlet into the evaporator to sense the saturation temperature of refrigerant in the evaporator.

6.  A method of controlling refrigerant flow in a refrigeration system from a condenser to an evaporator through a digitally controllable electronic expansion valve, which comprises the steps of:

sensing at least one operating condition of the refrigeration system;

generating an electrical signal which is a function of the sensed operating condition;

processing the generated electrical signal according to preprogrammed procedures to generate an electronic digital control signal; and

supplying the electronic digital control signal to the digitally controllable electronic expansion valve to incrementally adjust refrigerant flow through the expansion valve in response to the electronic digital control signal.

7.    A method of regulating refrigerant flow in a refrigeration system as recited in claim 6 wherein the sensing step comprises:

sensing superheat of refrigerant vapor flowing from the evaporator to the compressor.

_FIG. 1_

1/3

0147356

*FIG. 3*

*FIG. 2*

## FIG. 4